# DEMANDE DE BREVET EUROPEEN

(11) **EP 2 466 506 A1**
(43) Date de publication de la demande: **20.06.2012**
(21) Numéro de dépôt: 10306453.1
(22) Date de dépôt: 17.12.2010
(51) Int. Cl.: G06F 21/00

(54) **Procédé dynamique de contrôle de l'intégrité de l'exécution d'un code exécutable**

(71) Demandeur: Gemalto SA, 92190 Meudon (FR)
(72) Inventeur: Gonzalvo, Benoît, 13360 Roquevaire (FR)

(57) **Abrégé**

La présente invention décrit un procédé de sécurisation de l'exécution d'un programme informatique dans un dispositif multitâche. Ce procédé est basé sur l'exécution, en parallèle du programme a sécuriser, d'un thread de sécurité, apte à modifier les paramètres de l'ordonnanceur.

## Description

La présente invention se rapporte au domaine de la détection de fautes dans l'exécution d'un programme informatique par un composant électronique.

La carte à puce, et de manière plus générale, certains composants électroniques portables, sont bien souvent utilisés comme unité de calcul et de stockage de données secrètes et/ou sensibles dans le but de sécuriser une application. L'identité, la téléphonie mobile, le payement, le transport ou encore le contrôle d'accès sont autant de domaines d'applications dans lesquels la carte à puce joue un rôle essentiel.

Ce rôle consiste, entre autres et de manière non limitative, à une authentification du porteur de la carte et/ou de l'émetteur de la carte. La carte peut également contenir des « unités » qui peuvent correspondre à des points de fidélité, de l'argent (par exemple les unités téléphoniques) ou encore des tickets de métro selon l'application.

La carte représente ainsi, pour certains individus et organisations malveillants, une cible de prédilection afin de frauder ou de porter atteinte à l'image de marque d'une société.

La carte fait face depuis son déploiement à des menaces dont l'observation de la consommation de courant (Differential Power Analysis) mais également depuis peu aux attaques par injection de fautes transitoires. La détection de telles attaques est relativement complexe et la réponse à ces attaques difficile à mettre en oeuvre. Les composants électroniques actuels ne sont pas capables de garantir un fonctionnement correct quelles que soient les perturbations externes. Il en résulte que le logiciel ou système d'exploitation embarqué dans la carte doit se prémunir par lui-même de défaillances éventuelles du composant engendrées par une injection de faute sous peine de corruption de données sensibles.

L'art antérieur connaît déjà des solutions pour la détection de perturbations, par exemple des glitchs (impulsion de tension) qui seraient susceptibles d'entraîner une faute dans le fonctionnement du composant électronique. Notons l'existence de solutions matérielles qui consistent à intégrer des capteurs environnementaux (de température, de fréquence horloge, de tension d'alimentation, de lumière) qui vont détecter une perturbation (une tension anormalement basse, une intensité lumineuse trop forte) afin de réagir avant de rentrer dans une zone de fonctionnement du composant jugée instable et donc à risques en terme de faute. Ces solutions sont coûteuses car nécessitent le développement de capteurs spécifiques (coût économique) et l'intégration de ceux-ci dans des circuits parfois de petite taille (coût de taille).

On connaît également des solutions qui détectent l'effet de la perturbation subie, par exemple par la présence d'un bit de données modifié.

On distingue, entre autres, des solutions logicielles ou matérielles de type redondance d'un processus. La redondance consiste de manière simpliste à effectuer deux fois la même opération (calcul, transmission, ...) afin de comparer le résultat des deux actions. En mode logiciel, la redondance peut être un double calcul sur des données. En mode matériel, cette redondance peut se manifester pas la présence, par exemple, de deux registres dédoublés stockant a priori les mêmes valeurs. Si les résultats sont différents, alors il peut être raisonnablement conclu que l'une des actions s'est mal passée sûrement suite à une perturbation (faute).

Egalement, il existe des solutions logicielles ou matérielles de type contrôle d'intégrité. Une donnée stockée en mémoire non volatile se voit ajouté un « checksum » (somme de contrôle) de la donnée, cette somme permettant de détecter si la donnée est corrompue par une faute avant la vérification du checksum en cas d'incohérence entre la donnée et la somme checksum. L'ajout de données d'intégrité est répandu dans les couches logicielles, par exemple pour la transmission de données. Le checksum en hardware (matériel) tel qu'on le trouve dans l'art antérieur est mis en oeuvre uniquement au niveau d'un bloc mémoire, il prend bien souvent le nom de « bit de parité ». Le mot machine élémentaire (8 bits sur un composant 8-bit) est stocké sur 9 bits en mémoire, le 9ième bit étant un bit de parité positionné de sorte que la parité du mot soit systématiquement pair/impair. Lors d'une lecture, la parité est vérifiée et le mot de 8 bits est positionné sur le bus de données. Lors d'une écriture, le mot de 8 bits positionné sur le bus de données est écrit en mémoire et le bit de parité est généré dans le même temps. Le problème est que sur le bus de données, le mot transmit ne comprend pas de données d'intégrité : il n'y a aucun moyen de vérifier que cette valeur, une fois transférée vers la mémoire, l'unité centrale de traitement CPU ou le cache, est encore correcte.

Ces solutions sont suffisantes pour des fautes « accidentelles » qui surviennent pendant l'exécution d'une commande, par exemple dans le domaine spatial, les fautes étant ponctuelles (impulsions) et affectant soit la donnée (ou processus sensible) soit sa redondance ou son checksum. Notons que tout processus décisionnel ou de manipulation de donnée sensible ou de calcul cryptographique peut être considéré comme sensible. A titre d'exemple, et ce de manière non limitatif, on citera, le processus décisionnel de choix d'acceptation d'une commande ou encore de choix d'acceptation une opération de lecture/écriture/effacement d'un fichier ou encore le choix d'acceptation d'un débit ou d'un crédit sur une balance électronique ou encore de comparaison d'un code secret ou d'un MAC (Message Authentication Code).

Cependant, des personnes mal intentionnées peuvent répéter des fautes sur les composants électroniques et adapter leurs techniques jusqu'au succès. Ainsi il est envisageable que le pirate tente de reproduire la même faute à la fois sur le processus sensible et sur le processus redondant afin que la faute ne soit pas détectée.

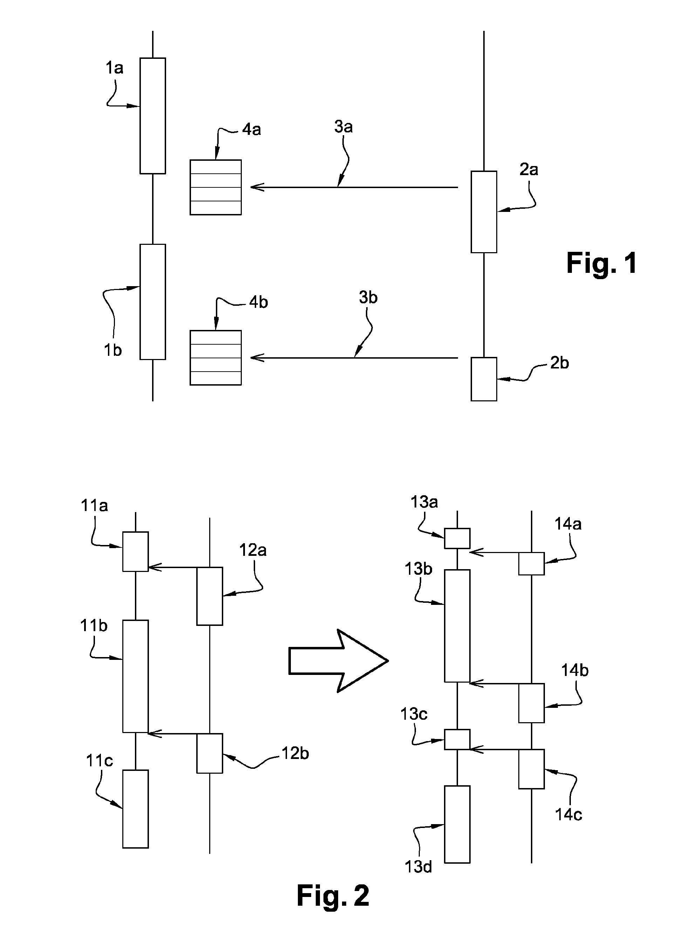

L'art antérieur connaît alors une solution consistant à insérer, comme illustré par la figure 1, un délai aléatoire entre un processus sensible et sa redondance. Cette solution accroît de façon importante la résistance de la protection contre les fautes.

Cependant toutes ces contremesures, comme n'importe quel code informatique exécutable, peuvent être observées par une personne mal intentionnée. Ces contremesures étant, par essence positionnées à proximité des opérations sensibles, leur détection peut dévoiler des informations critiques.

Ainsi de nouvelles attaques ont été mise au point par des personnes mal intentionnées : la combinaison de faute.

Cette catégorie d'attaques consiste en un enchainement d'au moins deux fautes consécutives, une sur les opérations sensibles, et l'autre sur la contremesure sensée les protéger. Il devient ainsi possible de perturber le fonctionnement des opérations sensibles, et d'empêcher les contremesures de détecter un tel acte. L'attaque sur les contremesures se fait généralement sur l'opération d'écriture qui consiste en l'inscription dans une mémoire, de la détection de la faute. Ainsi, la personne menant l'attaque détecte la contremesure, et provoque une faute afin d'empêcher cette écriture.

De façon générale, les solutions de l'art antérieur ne permettent pas de faire face de façon efficace à des perturbations consécutives pouvant affecter à la fois les processus sensibles et les contremesures associées.

L'apparition et la démocratisation des systèmes d'exploitation multi taches. Le terme de Thread sera utilisé dans le présent document pour désigner une succession d'instructions informatiques. Un thread est comparable à un processus, il consiste généralement en une portion d'un programme plus complexe.

Ces systèmes permettent l'exécution en parallèle de plusieurs programmes. Le plus souvent ces systèmes exploitent un seul et unique processeur. Le multitâches se fait donc affectant le processeur séquentiellement à chacun des programmes qui sont exécutés en « parallèle ». Ce mécanisme qui gère la charge d'un processeur, et l'attribue aux différents programmes à exécuter est couramment appelé ordonnanceur.

La présente invention entend remédier aux inconvénients de l'art antérieur en proposant un procédé de détection de fautes basé sur un système d'exploitation multitâches.

L'invention est particulière adaptée à la protection des environnements d'exécution tells que les machines virtuelles. Par exemple dans un environnement Java, et ses dérivés.

Pour cela, l'invention propose, dans un premier temps un procédé de protection de l'exécution, dans un dispositif électronique comportant au moins un processeur et une mémoire, d'un programme informatique dans un environnement multitâche comportant un programme dit ordonnanceur, de gestion de la charge dudit processeur. Ce procédé comprend au moins
- l'exécution d'un thread de sécurisation, en parallèle de l'exécution du programme informatique,
- exécution, par ledit thread, d' au moins une opération de vérification sur l'exécution du programme informatique
- analyse des résultats de l'opération de vérification
- envoie d' au moins une information à l'ordonnanceur

Le programme informatique peut être exécuté au sein d'une machine virtuelle.

Dans un mode d'implémentation, l'opération de vérification peut consister, par exemple, en l'analyse, dans la mémoire, de valeurs produites par le programme informatique, ou bien en l'analyse d'au moins un capteur, ce capteur pouvant être matériel ou logiciel.

Si le programme informatique est exécuté au sein d'une machine virtuelle, l'opération de vérification peut, par exemple, consister en l'analyse de la pile de la machine virtuelle, ou bien en l'analyse du tas de la machine virtuelle, ou bien en l'analyse de la pile d'exécution de la machine virtuelle, ou en l'analyse du compteur d'exécution de la machine virtuelle.

L'information transmise à l'ordonnanceur peut être une fréquence d'activation dudit thread de sécurisation.

L'invention propose, dans un second temps un programme informatique de gestion de la charge d'un processeur, dans un environnement multitâche, possédant des moyens configurés pour :
- Exécuter un thread de sécurisation en parallèle de l'exécution d' un programme à sécuriser,
- Recevoir, du thread de sécurisation, une information
- En fonction de l'information reçue, modifier la fréquence d'activation de chacun des processus en cours d'exécution par le processeur.

La modification de la fréquence d'activation de chacun des processus en cours d'exécution par le processeur peut, par exemple, consister en l'augmentation de la fréquence d'activation du thread de sécurisation, ou bien en l'augmentation de la fréquence d'activation du programme à sécuriser, ou bien en l'activation exclusive du thread de sécurisation.

D'autres caractéristiques et avantages de l'invention ressortiront clairement de la description qui en est faite ci-après, à titre indicatif et nullement limitatif, en référence aux dessins annexés dans lesquels :
- La figure 1 représente l'exécution d'un code protégé selon l'invention.
- La figure 2 représente deux exécutions d'un même code protégé selon l'invention.
- La figure 3 représente la réaction d'un système protégé selon l'invention après suspicion d'attaque.
- La figure 4 représente la réaction d'un système protégé selon l'invention dans le cas d'une attaque détectée.

Le process de sécurisation selon l'invention peut avantageusement avoir deux implémentations distinctes.

Dans un cas, ce process peut être un thread autonome et indépendant. Nous sommes par exemple dans le cas où ce thread serait un programme, chargé sur le dispositif à sécuriser, et exécuté en tant que programme.

Une autre solution consiste en l'intégration de ce thread dans le système lui-même. Cette intégration peut se faire avantageusement au niveau du système d'exploitation, par exemple dans l'ordonnanceur. Cette solution apporte une sécurité renforcée par la sécurité inhérente au contenu du système d'exploitation.

Dans le cas particulier de la sécurisation de l'exécution d'un programme exécuté au travers d'une machine virtuelle, il peut être particulièrement avantageux d'intégrer ce thread de sécurisation au sein de la machine virtuelle.

Dans la suite de la présente description, le terme de Thread sera utiliser pour designer indifféremment ces différents modes d'implémentation.

Dans la figure 1, on peut voir deux threads exécutés par un même processeur dans un dispositif électronique, par exemple un téléphone portable. Le premier thread (1a, 1b) est un programme a sécuriser (par exemple un programme de signature électronique), qui est exécuté dans une machine virtuelle. Le second thread, dit thread de sécurité est une fonctionnalité intégrée au système d'exploitation.

Selon l'invention, l'ordonnanceur du système d'exploitation interromps l'exécution du thread principal pour permettre au thread de sécurité de s'exécuter. Cette interruption peut se faire de manière régulière, mais dans un mode préfère d'implémentation, cette sequentialisation se fait selon au moins paramètre, dit paramètre aléatoire. Ce paramètre permet de déclencher selon un alea ou un pseudo-alea, l'activation du thread de sécurité.

Dans un mode préféré, l'invention peut fonctionner avec deux paramètres: un paramètre de fréquence, et un paramètre aléatoire. Le paramètre de fréquence permet de définir un temps minimal entre deux activations. Une fois le temps minimal écoulé, le paramètre aléatoire est pris en compte afin d'empêcher la prédiction de l'activation du thread de sécurité.

Dans un mode particulièrement avantageux d'implémentation de l'invention, l'ordonnanceur peut attendre un signal du thread de sécurité, avant de réactiver le thread principal, ainsi, si le thread de sécurité a été perturbé, le thread principal n'est pas réactivé.

Une fois activé, le thread de sécurité va exécuter un ensemble de commandes, dite commandes d'intégrité (3a, 3b), qui permettent de contrôler le bon déroulement du thread principal. Ces commandes peuvent être toute commande apte a lire, et évaluer au moins une valeur (4a, 4b) issue du thread principal. Dans le cas d'une machine virtuelle, ces commandes d'intégrité peuvent, avantageusement, vérifier des données de la machine virtuelles, liées à l'exécution du thread principal.

Les machines virtuelles possèdent un grand nombre d'information concernant le ou les programmes en cour d'exécution. Il est possible de classer ces informations en 2 grandes catégories : les informations liées aux données, et les informations liées à l'exécution en elle-même.

Le contrôle peut donc se faire, au niveau des données, ou bien au niveau de l'exécution.

Dans le cas d'un contrôle au niveau des données, le thread de sécurité peut contrôler, par exemple, le contenu de la « pile », ou le contenu du « tas ».

Dans le cas d'un contrôle au niveau de l'exécution, le thread de sécurité peut contrôler, par exemple, la pile d'exécution, ou le compteur de programme.

Afin que ces contrôles soient possible, il est nécessaire que le thread de sécurité ait des valeurs de références a contrôler. Ces valeurs peuvent être fournies directement dans le code du thread principal, ou bien être calculées par le thread de sécurité en fonction des informations sur le thread principal, contenues dans la machine virtuelle.

La figure 2 illustre deux exécutions d'un même programme (11a, 11b, 11c, 13a, 13b, 13c, 13d), sécurisé selon l'invention. Dans cet exemple, d'implémentation, seul le paramètre aléatoire est utilisé. Une fois le thread principal activé, l'ordonnanceur tire une valeur aléatoire, qui défini la prochaine interruption du thread principal pour activer le thread de sécurité.

Ainsi, dans l'exécution 11a, 11b, 11c, l'ordonnanceur a activé deux fois le thread de sécurité : 12a et 12b.

Dans la deuxième exécution 13a, 13b, 13c, 13d, l'ordonnanceur a procédé à 3 interruptions.

Cette figure illustre également la différence de durée des exécutions du thread de sécurité. Ce mécanisme selon l'invention est basé sur un nombre aléatoire, idéalement différent du paramètre aléatoire vu ci-avant, qui permet de définir les commandes d'intégrité exécutées par le thread de sécurité lors d'une de ses activations. Dans ce mode d'implémentation, à chaque activation le thread de sécurité exécute plus ou moins de commandes d'intégrité en fonction de cette valeur. Cette valeur peut être tirée par le thread lui-même, ou bien fournie par l'ordonnanceur lors de l'activation du thread de sécurité.

Dans un mode avantageux, l'invention prévoit que le thread de sécurité conserve, en mémoire, des informations sur les commandes d'intégrité exécutées. Cela afin d'éviter de faire, a chaque activation les mêmes contrôle, et ainsi de favoriser une complétude maximale des contrôles effectues.

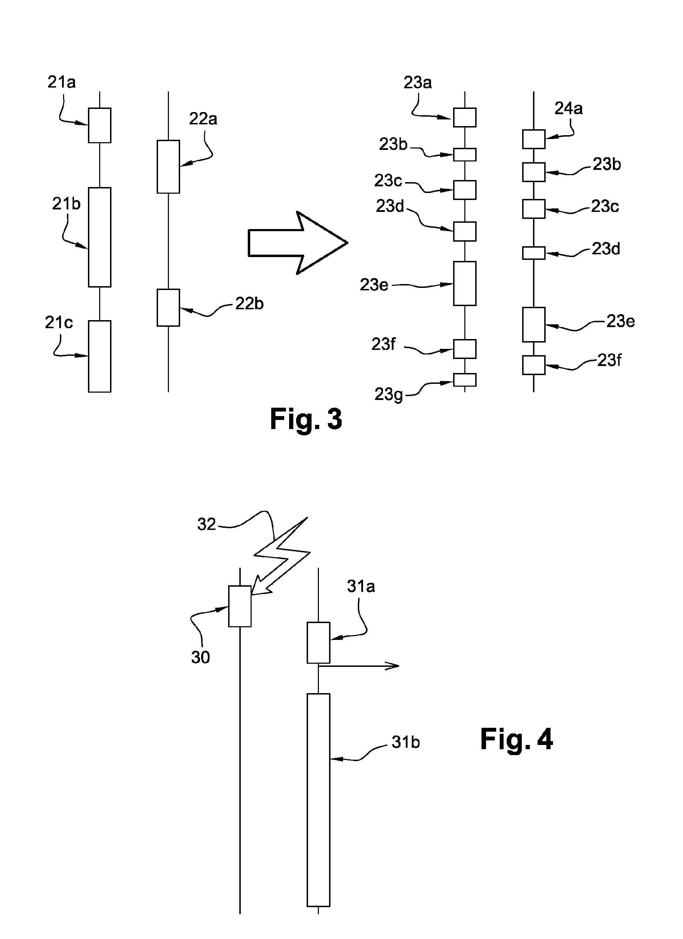

La figure 3 illustre la réaction de l'ordonnanceur, suite à une suspicion d'attaque.

Dans la figure 3, le thread principal 21a, 21b, 21c, est sécurisé par le thread de sécurité 22c, 22b selon l'invention. Lors d'une des commandes d'intégrité réalisées par le thread de sécurité, une situation dite « à risque », a été détectée. Un tel critère est défini dans les commandes d'intégrité. Le plus souvent, les résultats des commandes d'intégrité sont analysés, par le thread de sécurité, à la lumière de règles de sécurité. Le résultat de cette analyse est ainsi capable de définir la situation en cours comme étant par exemple:
- « Sécure » ou « normale » : pas d'anomalie détectée
- « à risque », ou suspicion : au moins un résultat est anormal, mais aucune donnée critique n'est menacée
- Attaque détectée : l'intégrité, la confidentialité ou la disponibilité de l'application surveillée sont mises en danger.

Dans le cas illustré par la figure 3, la situation est « à risque ». Selon l'invention, le thread de sécurité, après une telle analyse, à envoyé un message à l'ordonnanceur pour l'informer de la situation. L'ordonnanceur, selon l'invention, a donc modifié ses paramètres pour accentuer les contrôles de sécurité, et donc augmenté l'activation du thread de sécurité. Ainsi, dans la suite de l'exécution du thread principal 23a, 23b, 23c, 23d, 23e, 23f, 23g, l'ordonnanceur a augmenté la fréquence d'activation du thread de sécurité 24a, 24b, 24c, 24d, 24e, 24f. Cela permet de détecter toute évolution de la situation avec le plus de réactivité possible.

Le résultat de l'analyse effectuée par les commandes d'intégrité dans la situation « à risque » illustré dans la figure 3 peut, en fonction des règles de sécurité, faire évoluer la situation au cours du temps.

Selon les résultats d'analyse, si aucun risque supplémentaire n'est détecté, au bout d'un temps défini dans les règles de sécurité, le thread de sécurité peut envoyer à l'ordonnanceur une information visant a ramener l'ordonnancement des process dans une situation dite « normale », par exemple proche de celle illustrée dans la figure 2. A contrario, si de nouvelles informations « anormales » sont détectées, le thread de sécurité peut envoyer à l'ordonnanceur une information provocant un renforcement des contraintes de sécurité, par exemple en accentuant encore la fréquence d'activation du thread de sécurité.

La figure 4 illustre un cas, selon l'invention, de détection de faute.

Cette situation peut intervenir lorsque le thread de sécurité détecte une tentative d'attaque menée sur le thread principal, ou bien si les soupçons, par exemple qui ont amenés à la situation de la figure3, sont trop fort ou trop récurrents.

Dans cette réaction du système, une attaque est menée par un utilisateur mal intentionné, ou un programme malveillant, à l'encontre du thread principal 30. Cette attaque est détectée par le thread de sécurité 31a. Cette détection peut par exemple se faire en analysant les piles d'exécution ou le tas de la machine virtuelle qui exécute le thread 30. Le thread de sécurité envoie une information d'urgence 32 à l'ordonnanceur. A réception de ce message particulier, l'ordonnanceur sait qu'il ne doit plus activer le thread principal. Cette mesure a pour but principal de protéger le thread principal. En effet, tant que celui-ci n'est pas réactivé, l'attaquant ne pourra pas profiter des fruits de son attaque. LE thread de sécurité passa avantageusement dans un mode 31b, dans lequel il va pourvoir réagir à l'attaque détectée.

Cette réaction peut se faire de différentes manières, non exclusives et dont la combinaison est même préconisée selon l'invention :
- Effacement du contenu des mémoires liées au thread principal, et notamment des registres, piles, piles d'exécutions, tas .. de la machine virtuelle le cas échéant.
- Inscription de données en lieu et place des informations liées au thread principal, et notamment des registres, piles, piles d'exécutions, tas .. de la machine virtuelle le cas échéant
- Transmission d'une information vers l'extérieur du dispositif selon les moyens à disposition
- Inscription d'au moins une information sur ladite attaque dans une mémoire non volatile du dispositif électronique, et, de manière préférée, inscription de toutes les informations satellites (identifiant des éventuels dispositifs connectés au moment de l'attaque, relevé de tous les éventuels capteurs de sécurité au moment de l'attaque, ...)
- Inscription d'une donnée de blocage du dispositif dans une mémoire système non volatile afin d'empêcher une redémarrage « normal » du dispositif.

Dans un mode préféré de l'invention, l'information envoyée par le thread de sécurité à l'ordonnanceur en cas de détection d'attaque, peut se faire par tous les moyens connus de l'homme de l'art, notamment par le biais d'interruptions, et ce afin d'accélérer une telle transmission, et de rendre une éventuelle interception le plus difficile possible.

## Revendications

1. Procédé de protection de l'exécution, dans un dispositif électronique comportant au moins un processeur et une mémoire, d'un programme informatique dans un environnement multitâche comportant un programme dit ordonnanceur, de gestion de la charge dudit processeur, **caractérisé en ce qu'**il comprend
- l'exécution d'un thread de sécurisation, en parallèle de l'exécution dudit programme informatique,
- exécution, par ledit thread, d'au moins une opération de vérification sur l'exécution dudit programme informatique
- analyse des résultats de ladite opération de vérification
- envoie d'au moins une information audit ordonnanceur

2. Procédé selon la revendication 1, **caractérisé en ce que** ledit programme informatique est exécuté au sein d'une machine virtuelle.

3. Procédé selon la revendication 1, **caractérisé en ce que** ladite opération de vérification consiste en l'analyse de au moins un capteur.

4. Procédé selon la revendication 3, **caractérisé en ce que** ladite ledit capteur est un capteur logiciel.

5. Procédé selon la revendication 3, **caractérisé en ce que** ladite ledit capteur est un capteur matériel.

6. Procédé selon la revendication 1, **caractérisé en ce que** ladite opération de vérification consiste en l'analyse, dans ladite mémoire, de valeurs produites par ledit programme informatique.

7. Procédé selon la revendication 2, **caractérisé en ce que** ladite opération de vérification consiste en l'analyse de la pile de la machine virtuelle.

8. Procédé selon la revendication 2, **caractérisé en ce que** ladite opération de vérification consiste en l'analyse du tas de la machine virtuelle.

9. Procédé selon la revendication 2, **caractérisé en ce que** ladite opération de vérification consiste en l'analyse de la pile d'exécution de la machine virtuelle.

10. Procédé selon la revendication 2, **caractérisé en ce que** ladite opération de vérification consiste en l'analyse du compteur d'exécution de la machine virtuelle.

11. Procédé selon l'une des revendications précédentes, **caractérisé en ce que** ladite information consiste en une fréquence d'activation dudit thread de sécurisation.

12. Programme informatique de gestion de la charge d'un processeur, dans un environnement multitâche, **caractérisé en ce qu'**il possède des moyens configurés pour :
- Exécuter un thread de sécurisation en parallèle de l'exécution d'un programme à sécuriser,
- Recevoir dudit thread une information
- En fonction de ladite information reçue, modifier la fréquence d'activation de chacun des processus en cours d'exécution par ledit processeur.

13. Programme informatique selon la revendication précédente, **caractérisé en ce que** ladite modification de la fréquence d'activation de chacun des processus en cours d'exécution par ledit processeur consiste en l'augmentation de la fréquence d'activation dudit thread de sécurisation.

14. Programme informatique selon la revendication 12, **caractérisé en ce que** ladite modification de la fréquence d'activation de chacun des processus en cours d'exécution par ledit processeur consiste en l'augmentation de la fréquence d'activation dudit programme à sécuriser.

15. Programme informatique selon la revendication 12, **caractérisé en ce que** ladite modification de la fréquence d'activation de chacun des processus en cours d'exécution par ledit processeur consiste en l'activation exclusive dudit thread de sécurisation.
